Europäisches Patentamt

European Patent Office

Office européen des brevets

(11) Veröffentlichungsnummer: **0 069 959**
**A2**

## (12) EUROPÄISCHE PATENTANMELDUNG

(21) Anmeldenummer: 82105991.2

(22) Anmeldetag: 05.07.82

(51) Int. Cl.³: **B 23 C 5/18**

(30) Priorität: 06.07.81 DE 3126565

(43) Veröffentlichungstag der Anmeldung:
19.01.83 Patentblatt 83/3

(84) Benannte Vertragsstaaten:
AT BE CH DE FR GB IT LI LU NL SE

(71) Anmelder: LACH-SPEZIAL-Werkzeuge GmbH
Bruchköbeler Landstrasse 39-41
D-6450 Hanau/Main(DE)

(72) Erfinder: Lach, Horst
Dammstrasse 5
D-6450 Hanau 1(DE)

(74) Vertreter: Strasse, Joachim et al,
Strasse & Stoffregen, Patentanwälte
Zweibrückenstrasse 15
D-8000 München 2(DE)

(54) Schneidelement.

(57) Damit beim Befestigen eines Schneidelements (34) auf dem Stammkörper (40) eines umlaufenden Werkzeugs eine Ausrichtung mit einer Genauigkeit erfolgt, die ein Nachbearbeiten der Schneide nicht erforderlich macht, weist das Schneidelement eine Ausnehmung (36) oder einen Vorsprung auf, der bzw. dem ein korrespondierender Vorsprung (38) oder eine Ausnehmung im Stammkörper zugeordnet ist, wobei der höchste Punkt des Vorsprungs den tiefsten Punkt der Ausnehmung berührt und sich zwischen den aneinandergrenzenden Flächen von Vorsprung und Ausnehmung Weich- und/oder Hartlot befindet.

FIG. 3

EP 0 069 959 A2

0069959

Lach Spezial-Werkzeuge GmbH

Bruchköbeler Landstraße 39-41

6450 Hanau/Main 1

München, 05. Juli 1982

ei   14 103

## Schneidelement

Die Erfindung bezieht sich auf ein Schneidelement, vorzugsweise mit dem Stammkörper eines umlaufenden Werkzeuges wie Kreissägeblatt, Nutwerkzeug, Zerspanwerkzeug für die Bearbeitung von Holz oder Holzwerkstoffen, Kunststoffen oder Nichteisenmetallen verlötet.

Solche Schneidelemente bestehen vorzugsweise aus einem Basiskörper z.B. in Form einer Hartmetallplatte, auf die ihrerseits die Schneide aufgebracht ist, die z.B. aus polykristallinem synthetischem Diamant oder kubisch kristallinem Bornitrid oder Hartmetall z.B. in Form von Wolfram-Verbindungen oder Titan-Verbindungen oder Keramik bestehen kann. Selbverständlich kann das Schneidelement auch selbst die Schneide sein.

Das Aufbringen und Befestigen der Schneidelemente auf den Stammkörper, also z.B. bei einem Kreissägeblatt auf die Brustflächen der Segmente, bereitet häufig Schwierigkeiten, da ein überaus genaues Ausrichten erforderlich ist.

Da dieses jedoch häufig nicht möglich ist, muß ein Nachbearbeiten der Schneide nach aufgebrachtem Schneidelement erfolgen, um z.B. den gewünschten Schneidwinkel oder die gewünschte Höhe des Flugscharkreises zu erhalten.

Aufgabe der vorliegenden Erfindung ist es, ein Schneidelement mit dem zugehörigen Stammkörper derart auszubilden, daß beim Befestigen die gewünschte Ausrichtung mit einer Genauigkeit erzielt wird, daß ein Nachbearbeiten der Schneide nicht erforderlich ist.

Die Aufgabe wird erfindungsgemäß dadurch gelöst, daß das Schneidelement eine Ausnehmung oder einen Vorsprung aufweist, der bzw. dem ein korrespondierender Vorsprung oder eine Ausnehmung im Stammkörper zugeordnet ist. Demzufolge ist beim Befestigen des Schneidelements auf dem Stammkörper durch das Ineinandergreifen von Vorsprung und Ausnehmung sichergestellt, daß das Schneidelement die gewünschte Ausrichtung besitzt. Zur endgültigen Befestigung ist dann vorzugsweise Weich- und/oder Hartlot in Form z.B. einer Lötpaste in den Bereich der Berührungsflächen von Schneidelement und Stammkörper eingebracht.

Um sicherzustellen, daß zwischen dem tiefsten Punkt der Ausnehmung und dem höchsten Punkt des Vorsprungs das Weich- und/oder Hartlot nicht verbleiben kann, wodurch ein Lotpolster entstehen könnte, das eine genaue Orientierung von Stammkörper zu Schneidelement möglicherweise erschwert, wird in einer besonders hervorzuhebenden Ausgestaltung der Erfindung vorgeschlagen, daß bei auf dem Stammkörper befestigten Schneidelement der höchste Punkt des Vorsprungs den tiefsten Punkt der Ausnehmung berührt und daß sich zwischen den aneinandergrenzenden Flächen von Vorsprung und Ausnehmung Lot befindet. Damit das Lötmittel aus dem Bereich des höchsten Punkts des Vorsprungs und des tiefsten Punkts der Ausnehmung entweichen kann, wird des weiteren vorgeschlagen, daß die Flächenneigungswinkel der Ausnehmung größer als die Neigungswinkel der zugeordneten Flächen der korrespondierenden Vorsprünge bezogen auf deren jeweilige Hauptachse sind. Durch diese geometrische Ausgestaltung von Ausnehmung und Vorsprung ist sichergestellt, daß das zum Befestigen des Schneidelements auf dem Stammkörper erforderliche Weich- und/oder Hartlot in den Zwischenbereich von Vorsprung und Ausnehmung vorhanden ist, ohne daß eine fehlerhafte Ausrichtung von Schneidelement zu Stammkörper zu befürchten ist.

Vorzugsweise ist die Ausnehmung und der entsprechende korrespondierende Vorsprung kegelstumpfförmig, kegelförmig, pyramidenstumpfförmig oder pyramidenförmig ausgebildet.

Um auszuschließen, daß das zwischen den aneinandergrenzenden Flächen von Schneidelement und Stammkörper außerhalb des Vorsprungs bzw. der Ausnehmung vorhandene Weichlot zu einem Verkippen des Schneidelements zum Stammkörper führen kann, wird in weiterer Ausgestaltung der Erfindung vorgeschlagen, daß das Schneidelement sich in Richtung auf den Stammkörper erstreckende Abstandselemente aufweist, so daß dadurch sichergestellt ist, daß bei sich berührendem Schneidelement und Stammkörper, welches ein Verkippen ausschließt, das Weichlot in Form von z.B. Lötpaste entweichen kann.

Als bevorzugt dürfte die Geometrie der Ausnehmung bzw. des Vorsprungs zu bezeichnen sein, die einem Pyramidenstumpf oder einem Kegelstumpf entspricht. In diesem Fall liegen die Schnittflächen von Ausnehmung und Vorsprung bei auf den Stammkörper aufgebrachtem Schneidelement eng aufeinander, wodurch eine Fehlausrichtung durch z.B. Verkippen oder Verkanten vollständig ausgeschlossen ist.

Weitere Einzelheiten, Vorteile und Merkmale der Erfindung ergeben sich aus der nachfolgenden Beschreibung der Zeichnung.

Es zeigen:

Fig. 1   einen Ausschnitt eines Kreissägeblattes,

Fig. 2   eine vergrößerte Darstellung einer Ausführungsform einer Befestigung eines Sägezahns mit dem Sägeblatt und

Fig. 3   eine weitere Ausführungsform einer Befestigung eines Sägezahns mit dem Sägeblatt.

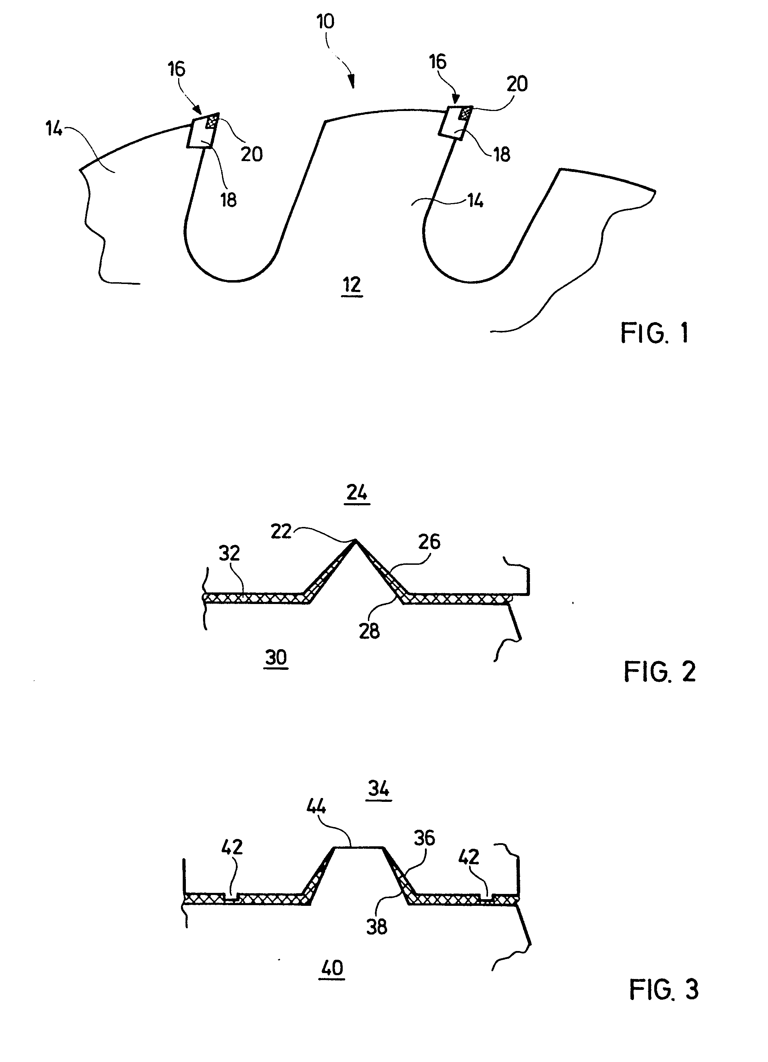

In Fig. 1 ist als Beispiel eines umlaufenden Werkzeuges ein Ausschnitt eines Kreissägeblattes 10 dargestellt, das aus einem Stammkörper 12 besteht, der im Ausführungsbeispiel zwei Segmente 14 aufweist. Auf den Brustflächen der Segmente 14 sind Schneidelemente 16 aufgebracht, deren Befestigungsart im Zusammenhang mit den Fig. 2 und 3 näher erläutert wird. Jedes Schneidelement 16 besteht vorzugsweise aus einem Basiselement in Form einer Hartmetallplatte 18, auf der die eigentliche Schneide 20 befestigt, z.B. gelötet ist. Die Schneide kann dabei vorzugsweise aus polykristallinem synthetischem Diamant oder kubisch kristallinem Bornitrid oder Hartmetall z.B. in Form von Wolfram-Verbindungen oder Titan-Verbindungen oder Keramik bestehen.

Entscheidend für die Genauigkeit der Bearbeitung von mit dem Kreissägeblatt 10 bearbeiteten Werkstücken ist die genaue Ausrichtung der Schneide 20 und damit des Schneidelements 16 in bezug auf den Stammkörper 12, um z.B. den gewünschten Schneidwinkel oder Flugscharkreisdurchmesser zu erzielen. Um ein Nachbearbeiten der Schneide 20 auszuschließen, um also sicher zu sein, daß das Schneidelement 16 die gewünschte Orientierung zum Stammkörper 12 aufweist, wird erfindungsgemäß vorgeschlagen, daß das Schneidelement 16 in dem dem Stammkörper 12, also der Brustfläche des Segments 14 zugewandten Bereich einen Vorsprung oder eine Ausnehmung aufweist, der bzw. die mit einer korrespondierenden Ausnehmung bzw. Vorsprung an der Brustfläche des Segments 14 zusammenwirkt. In den Ausführungsbeispielen der Figuren 2 und 3 weist dabei das Schneidelement die Ausnehmung und der Stammkörper den Vorsprung auf. Selbstverständlich ist auch die umgekehrte Konfiguration möglich.

In Fig. 2 ist ein Ausschnitt eines Schneidelements 24 - hier eines Sägezahns - dargestellt, welches eine kegelförmige Ausnehmung 26 aufweist, in die ein gleichfalls kegelförmig ausgebildeter Vorsprung 28 der zugeordneten Brustfläche 30 eines Segmentes eingreift. Dabei ist der von den Seitenflächen der kegelförmigen Ausnehmung 26 eingeschlossene Winkel größer als der entsprechende Winkel des Vorsprungs 28. Dadurch ist sichergestellt, daß die Spitze 22 der Ausnehmung 26 mit der Spitze 22 der Ausnehmung 28 in innige Berührung gelangen, ohne daß die Seitenflächen aufeinanderliegen müssen. Vielmehr können in dem Bereich der aneinandergrenzenden Flächen der Ausnehmung 26 und des Vorsprungs 28 ein Lötmittel wie z.B. eine Lötpaste eingebracht werden, damit die Verbindung zwischen dem Schneidelement 24 und der Brustfläche 30 hergestellt werden kann. Die Lötpaste 32 befindet sich im Ausführungsbeispiel der Fig. 2 nicht nur zwischen den Flächen der Ausnehmung 26 und des Vorsprungs 28 korrespondierender Geometrien, sondern auch zwischen den außerhalb dieses Bereichs liegenden Flächen.

Dadurch besteht jedoch die Gefahr, daß ein Verkanten des Schneidelements 24 in bezug auf die Brustfläche 30 erfolgt, sofern z.B. zuviel Lötpaste in den Zwischenbereich eingebracht worden ist. Um ein solches Verkanten vollkommen auszuschließen, wird eine spezielle Ausbildung von Vorsprung und korrespondierender Ausnehmung in Fig. 3 vorgeschlagen. Ein Schneidelement 34 weist eine kegelstumpf- oder pyramidenstumpfförmige Ausnehmung 36 auf, der ein entsprechender Vorsprung 38 am Stammkörper 40 zugeordnet ist. Um ein Verkippen des Schneidelements 34 in bezug auf den Stammkörper 40 bei eingebrachter Lötpaste zu verhindern, weisen die Schnittflächen 44 der kegel- oder pyramidenförmigen Ausnehmung 36 bzw. des korrespondierenden Vorsprungs 38 die gleiche Dimensionierung auf, wohingegen die angrenzenden Seitenflächen unterschiedliche Neigungswinkel beschreiben, also einen Zwischenraum freigeben, in den die Lötpaste eingebracht werden kann. Da nunmehr über einen größeren Flächenbereich das Schneidelement 34 eng auf dem Vorsprung 38 des Stammkörpers 40 aufliegt, ist ein Verkippen, Verkanten ausgeschlossen.

Zusätzlich können Vorsprünge 42, die von dem Schneidelement 34 ausgehen und sich in Richtung des Stammkörpers 40 erstrecken, angeordnet sein, um weitere feste Auflagepunkte von Schneidelement 34 und Stammkörper 40 zu gewährleisten. Dadurch ist sichergestellt, daß die in dem Bereich zwischen dem Schneidelement 34 und dem Stammkörper 40 eingebrachte Lötpaste ohne Schwierigkeiten aus den Berührungsbereichen entweichen kann. Würden entsprechende Vorsprünge auch bei der Konfiguration nach Fig. 2 vorgesehen sein, so wäre selbstverständlich gleichfalls sichergestellt, daß ein Verkanten des Schneidelements 24 in bezug auf Brustfläche 30 ausgeschlossen ist, wenngleich nur ein punktförmige Berührung 22 zwischen diesen Elementen erfolgt.

Lach Spezial-Werkzeuge GmbH

Bruchköbeler Landstraße 39-41

6450 Hanau/Main 1

München, 05, Juli 1982

ei 14 103

Schneidelement

A n s p r ü c h e:

1. Schneidelement vorzugsweise mit dem Stammkörper eines umlaufenden Werkzeuges wie Kreissägeblatt, Nutwerkzeug, Zerspanwerkzeug für die Bearbeitung von Holz oder Holzwerkstoffen, Kunststoffen oder Nichteisenmetallen verlötet, d a d u r c h   g e k e n n z e i c h n e t, daß das Schneidelement (16, 24, 34) eine Ausnehmung (26, 36) oder einen Vorsprung aufweist, der bzw. dem ein korrespondierender Vorsprung (28, 38) oder eine Ausnehmung im Stammkörper (12, 30, 40) zugeordnet ist.

2. Schneidelement nach Anspruch 1, d a d u r c h   g e k e n n z e i c h n e t, daß die Flächenneigungswinkel der Ausnehmung (26, 36) größer als die Neigungswinkel der zugeordneten Flächen der korrespondierenden Vorsprünge (28, 38) bezogen auf deren jeweilige Hauptachse sind.

3. Schneidelement nach Anspruch 2,
d a d u r c h   g e k e n n z e i c h n e t,
daß die Hauptachse mit den Symmetrieachsen der Vorsprünge (28, 38) bzw. Ausnehmungen (26, 36) zusammenfallen.


4. Schneidelement nach zumindest Anspruch 2
d a d u r c h   g e k e n n z e i c h n e t,
daß die Ausnehmung (26, 36) bzw. der Vorsprung (28,
38) kegelförmig, kegelstumpfförmig, pyramidenförmig
oder pyramidenstumpfförmig ausgebildet ist.


5. Schneidelement nach Anspruch 1,
d a d u r c h   g e k e n n z e i c h n e t,
daß bei auf dem Stammkörper (12, 30, 40) befestigtem
Schneidelement (16, 24, 34) der höchste Punkt des
Vorsprungs (28, 38) den tiefsten Punkt der Ausnehmung
(26, 36) berührt und daß sich zwischen den aneinandergrenzenden Flächen von Vorsprung und Ausnehmung Weich-
und/oder Hartlot befindet.


6. Schneidelement nach zumindest Anspruch 1,
d a d u r c h   g e k e n n z e i c h n e t,
daß das Schneidelement (16, 24, 34) sich in Richtung
auf den Stammkörper (12, 30, 40) erstreckende Abstandselemente (42) aufweist.


7. Schneidelement nach zumindest Anspruch 1,
d a d u r c h   g e k e n n z e i c h n e t,

daß bei pyramidenstumpf- oder kegelstumpfförmig ausgebildeter Ausnehmung (26, 36) bzw. ausgebildetem Vorsprung (28, 38) die Schnittflächen gleich groß sind.

0069959

FIG. 1

FIG. 2

FIG. 3